# EUROPEAN PATENT APPLICATION

(11) **EP 4 687 018 A1**
(43) Date of publication of application: **04.02.2026**
(21) Application number: 25186888.1
(22) Date of filing: 02.07.2025
(51) Int. Cl.: G06F 3/0485, G06F 3/0488, G06F 3/04883, G06F 3/04886

(54) **INFORMATION PROCESSING APPARATUS AND INFORMATION PROCESSING METHOD**

(30) Priority: 29.07.2024 JP 2024122509
(71) Applicant: TOYOTA JIDOSHA KABUSHIKI KAISHA, Toyota-shi, Aichi-ken 471-8571 (JP)
(72) Inventor: MATSUZAWA, Sota, Toyota-shi, 471-8571 (JP)
(74) Representative: TBK

(57) **Abstract**

Provided is a controller configured to execute: detecting an input for moving a display area within a screen, the display area being an area in which an image corresponding to content is displayed; identifying, in response to detection of the input, content corresponding to the image displayed in the display area within the screen; and replacing, in response to the content thus identified being predetermined content, an image corresponding to the predetermined content while moving the display area within the screen, with a predetermined fixed image.

## Description

### BACKGROUND

### Technical Field

The present disclosure relates to an information processing apparatus and an information processing method.

### Description of the Related Art

It is known that when a user performs a flick operation on a display area in which a touch panel is arranged, a CPU switches a display content while scrolling it in a direction of the flick operation. In addition, it is also known that for frames whose display priorities are lower than a priority threshold set according to the load of the CPU, a currently displayed frame continues to be displayed without being switched to the next frame (see, for example, Patent Literature 1). This reduces the load on the CPU.

### Citation List

### Patent Literature

Patent Literature 1: Japanese Patent Application Laid-Open Publication No. 2013-134596

### SUMMARY

An object of the present disclosure is to prevent an image displayed on a screen from being unable to follow a user's operation.

One aspect of the present disclosure is directed to an information processing apparatus comprising a controller configured to execute:
receiving a signal from a sensor that detects when a user touches a screen;
determining, according to information stored in a storage, whether or not the signal from the sensor is a signal for moving a display area within the screen, the display area being an area in which an image corresponding to content is displayed;
identifying, according to information stored in the storage, the content corresponding to the image displayed in the display area within the screen in response to a determination that the signal is a signal for moving the display area within the screen;
determining, according to information stored in the storage, whether the content thus identified is predetermined content;
replacing, in response to a determination that the content is the predetermined content, the image corresponding to the predetermined content, which is to be displayed in the display area corresponding to each of frames while moving the display area within the screen, with a predetermined fixed image that is the same predetermined fixed image in each of the frames and is stored in the storage; and
outputting, for each of the frames, a signal for displaying the predetermined fixed image in the display area corresponding to the predetermined content automatically in real time when the display area is moved within the screen in response to the signal detected from the sensor.

Another aspect of the present disclosure is directed to an information processing apparatus comprising a controller configured to execute:
detecting an input for moving a display area within a screen, the display area being an area in which an image corresponding to content is displayed;
identifying, in response to detection of the input, the content corresponding to the image displayed in the display area within the screen; and
replacing, in response to the content thus identified being predetermined content, the image corresponding to the predetermined content while moving the display area within the screen, with a predetermined fixed image.

A further aspect of the present disclosure is directed to an information processing method for causing a computer to execute:
detecting an input for moving a display area within a screen, the display area being an area in which an image corresponding to content is displayed;
identifying, in response to detection of the input, the content corresponding to the image displayed in the display area within the screen; and
replacing, in response to the content thus identified being predetermined content, the image corresponding to the predetermined content while moving the display area within the screen, with a predetermined fixed image.

In addition, a still further aspect of the present disclosure is directed to a program that is executed by the information processing apparatus, or is directed to a storage medium that stores the program in a non-transitory manner.

According to the present disclosure, it is possible to prevent an image displayed on a screen from being unable to follow a user's operation.

### BRIEF DESCRIPTION OF THE DRAWINGS

FIG. 1 is a diagram illustrating a schematic configuration of a vehicle according to a first embodiment;
FIG. 2 is a view illustrating an example of a home screen displayed on a display;
FIG. 3 is a view illustrating an example of the home screen displayed on the display while page scrolling the home screen illustrated in FIG. 2 in the left direction;
FIG. 4 is a diagram illustrating the home screen on which an image including the text "SCROLLING" is displayed in the display area of a map widget during scrolling;
FIG. 5 is a view illustrating the home screen on which an image displayed in the map widget at the start of scrolling is displayed in the display area of the map widget during scrolling;
FIG. 6 is a diagram illustrating by way of example a functional configuration of an in-vehicle device;
FIG. 7 is a flowchart of processing in the in-vehicle device when page scrolling is performed on the home screen according to the first embodiment;
FIG. 8 is a view illustrating an example of the home screen on which a second map widget is displayed on the display in addition to the map widget;
FIG. 9 is a view illustrating an example of the home screen displayed on the display while page scrolling the home screen illustrated in FIG. 8 in the left direction; and
FIG. 10 is a flowchart of processing in the in-vehicle device when page scrolling is performed on the home screen according to a second embodiment.

### DESCRIPTION OF THE EMBODIMENTS

As a specific example of an animation display in a display device, there is known an animation display in which, when a user performs a flick operation on a display area where a touch panel is placed, a display content changes while scrolling in the direction of the flick operation. However, in a case where certain items are displayed, scrolling as is may result in a decrease in rendering performance. For example, in the past, frames are thinned out to reduce the processing load on a processor, but in this case, there is a risk that the animation may appear rough. In addition, in a case where the processing load for any of the frames is large, there is also a risk that the animation cannot be displayed at all. Further, even if control such as switching pages by a flick operation is possible, it is impractical to process frame thinning control in real time in the case where a page scrolls following a swipe operation while the user is touching it with the swipe operation. In addition, when the processing load on the processor increases due to the animation display, there is a risk of adverse effects on other information processing other than the animation display.

In contrast, a controller included in an information processing apparatus, which is one of the aspects of the present disclosure, detects an input for moving a display area within a screen, the display area being an area in which an image corresponding to content is displayed. The content includes, for example, content such as display of a map including a current location, playback of video, display of a weather forecast, playback of music, answer to a phone call, display of vehicle information, display of a clock, or the like. These may be widgets. In the display of the map including the current location, for example, an image showing the map, route, current location, and the like is displayed in the display area. In the playback of video, for example, the video is displayed in the display area. The video includes, for example, a television video, a moving image supplied from a storage medium, a moving image supplied from the Internet, or the like. In the weather forecast, for example, a text or an image corresponding to the weather is displayed in the display area. In the playback of music, for example, an image corresponding to the music, a song name, and a time bar are displayed in the display area. In the display of the clock, for example, the current time and date are displayed in the display area. In this way, an image corresponding to the content is displayed in the display area. Each content is assigned a display area of a size corresponding to that content. A plurality of display areas corresponding to a plurality of pieces of content may be arranged on the screen. That is, images corresponding to a plurality of pieces of content may be displayed on one screen. The display area of each content can be moved within the screen. This movement can include, for example, page scrolling, zooming in and out. In addition, this movement also includes, for example, a change in arrangement in the same screen without page scrolling. In the case of page scrolling, the movement of the display area may include a movement of the display area from inside the screen to outside the screen and a movement of the display area from outside the screen to inside the screen. The input for moving the display area within the screen is, for example, an operation such as a flick, a swipe, or a pinch by the user. The controller detects these operations input by the user, for example, when the user touches the screen and makes finger movements associated with these operations. For example, when the user touches the screen and performs a finger movement associated with a flick operation or a swipe operation, the controller detects an input for moving the display area within the screen. Note that the user touching the screen means that the user touches the touch panel. Further, instead of the touch panel, the movement of fingers of the user may be detected by a camera or the like.

In addition, in response to detection of the input, the controller identifies the content corresponding to the image displayed in the display area within the screen. In cases where a plurality of display areas corresponding to a plurality of pieces of content are arranged within the screen, the controller respectively identifies the pieces of content corresponding to the respective display areas. Moreover, in cases where it is predicted that the display area arranged outside the screen at the current time point moves into the screen by moving the display area within the screen, the controller may identify the content corresponding to the display area that is moving into the screen.

Also, the controller replaces, in response to the content thus identified being predetermined content, the image corresponding to the predetermined content while moving the display area within the screen, with a predetermined fixed image. The predetermined content is content that may not be displayed correctly if animation display is performed while the corresponding display area is moving. For example, the predetermined content may be content that cannot be displayed in all frames when animated while the corresponding display area is moving. The predetermined content may be determined, for example, according to the performance of the processor or storage. In the case where an image corresponding to such predetermined content is displayed on the screen, performing animation display during the movement of the corresponding display area may cause a malfunction with the animation display. In such a case, the controller replaces the image to be displayed in the moving display area with the predetermined fixed image. The fixed image is an image that does not change during the movement of the display area, and is a single still image. The controller displays the same fixed image in the display area during the movement of the display area. That is, the controller displays the same image in the display area corresponding to the predetermined content in all the frames during the movement of the display area. For example, in the case of content that plays video, the image to be displayed in the display area changes over time before the display area is moved. On the other hand, the image to be displayed in the display area should not change over time while the display area is moving. With such a fixed image, the processing load on the processor can be reduced even when the display area is moved within the screen, and thus it is possible to suppress the occurrence of a malfunction in the animation display during the movement of the display area. This makes it possible to improve UX (User Experience). Note that when the movement of the display area is completed, the predetermined fixed image is switched to an image corresponding to the content. That is, the image may change with the passage of time.

Further, the controller may obtain, as the predetermined fixed image, an image corresponding to the predetermined content at the time point at which the display area starts to move. The controller may, for example, generate, as the fixed image, an image that is captured from the image that was displayed in the display area at the start of scrolling.

In addition, the controller may obtain, as the predetermined fixed image, an image including a text indicating that the display area is moving. The controller may, for example, obtain an image including a text indicating that scrolling is in progress. This image may be stored in the storage in advance.

Moreover, the controller may use an image of a single color as the predetermined fixed image. For example, the controller may obtain an image of a single color such as black or white. This image may be stored in the storage in advance.

Further, the image corresponding to the predetermined content may include an image that changes over time. The predetermined content may also include content that provides at least one of a map including the current location and video playback. The image that changes over time includes, for example, an image of a map including the current location, a television video, or a moving image. In these images and video, there is a risk that the processing load on the processor during the movement of the display area becomes high. Therefore, by restricting the animation display of these pieces of content during the movement of the display area, it is possible to suppress the occurrence of a malfunction in the animation display. Thereby, the UX can be improved.

In addition, the information processing apparatus may further include a storage configured to store the predetermined fixed image corresponding to the predetermined content. The predetermined fixed image corresponding to the predetermined content may be stored in the storage in advance. The fixed image in this case may be, for example, an image of a single color or an image including a text indicating that the display area is moving. Also, the controller may, for example, store in the storage an image obtained by capturing an image corresponding to the content at the time point at which the display area starts to move.

Moreover, the controller may display the image corresponding to the content while moving the display area within the screen in response to the identified content being content other than the predetermined content. In the case of content other than the predetermined content, even if the image is changed over time during the movement of the display area, there is a low possibility that a malfunction occurs in the animation display. In the case of such content, the UX can be improved by displaying an image that changes over time in the display area even during the movement of the display area.

Hereinafter, embodiments of the present disclosure will be described based on the accompanying drawings. The configurations of the following embodiments are examples, and the present disclosure is not limited to the configurations of the embodiments. In addition, the following embodiments can be combined with one another as long as such combinations are possible and appropriate.

### <First Embodiment>

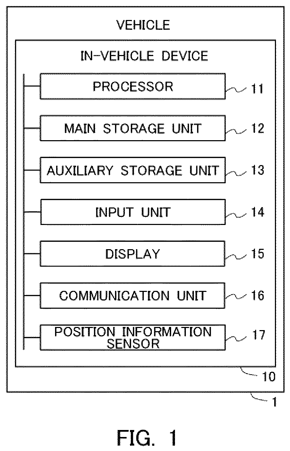

FIG. 1 is a diagram illustrating a schematic configuration of a vehicle 1 according to a first embodiment. The vehicle 1 is a vehicle owned by a user who is a driver. The vehicle 1 is equipped with an in-vehicle device 10. The in-vehicle device 10 may be a multimedia device or a navigation device. In addition, the in-vehicle device 10 may be a device that can be detached from the vehicle 1. The in-vehicle device 10 includes a processor 11, a main storage unit 12, an auxiliary storage unit 13, an input unit 14, a display 15, a communication unit 16, and a position information sensor 17. These components are mutually connected to one another by means of a bus.

The processor 11 is a CPU (Central Processing Unit), a DSP (Digital Signal Processor), or the like. The processor 11 controls the in-vehicle device 10 thereby to perform various information processing operations. The main storage unit 12 is a RAM (Random Access Memory), a ROM (Read Only Memory), or the like. The auxiliary storage unit 13 is an EPROM (Erasable Programmable ROM), a hard disk drive (HDD), a removable medium, or the like. The auxiliary storage unit 13 also stores an operating system (OS), various kinds of programs, various kinds of tables, and the like. The processor 11 loads the programs stored in the auxiliary storage unit 13 into a work area of the main storage unit 12 and executes the programs, so that each of the component units and the like is controlled through the execution of the programs. As a result, the in-vehicle device 10 realizes functions that meet predetermined purposes. The main storage unit 12 and the auxiliary storage unit 13 are examples of a storage unit. Also, the main storage unit 12 and the auxiliary storage unit 13 are computer-readable recording media. Note that the in-vehicle device 10 may be a single computer or a plurality of computers that cooperate with one another. In addition, the information stored in the auxiliary storage unit 13 may be stored in the main storage unit 12. Also, the information stored in the main storage unit 12 may be stored in the auxiliary storage unit 13.

Here, note that a series of processing executed by the in-vehicle device 10 can be executed by hardware, but can also be executed by software.

The input unit 14 is a means or unit for receiving an input operation performed by a user, and is, for example, a touch panel. As the touch panel, there can be adopted, for example, a pressure-sensitive touch panel, which detects the pressure with which the user presses the panel, and a capacitive touch panel, which detects a change in capacitance when the user presses the panel. Note that as another example, the input unit 14 may be a button capable of operating the display 15. The display 15 is a means or unit that presents information to the user, and is, for example, an LCD (Liquid Crystal Display), an EL (Electroluminescence) panel, or the like. The input unit 14 and the display 15 may be configured as a single touch screen. Note that in the following, when the user touches the screen, it means that the user touches the touch panel.

The communication unit 16 is a communication means or unit for connecting the in-vehicle device 10 to a network N1. In the present embodiment, the in-vehicle device 10 can communicate with other devices via a network by using mobile communication services such as 3G, LTE, 5G, 6G, etc.

The position information sensor 17 obtains position information (e.g., latitude and longitude) of the vehicle 1. The position information sensor 17 is, for example, a GPS (Global Positioning System) receiver unit, a wireless communication unit or the like.

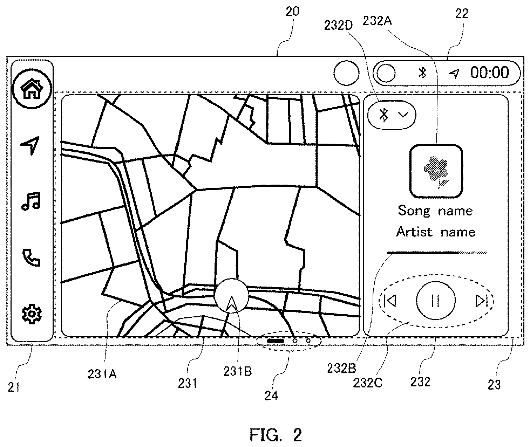

Now, the functions of the in-vehicle device 10 will be described. The in-vehicle device 10 provides content to the user by displaying a screen corresponding to the content on the display 15. FIG. 2 is a view illustrating an example of a home screen 20 displayed on the display 15. The home screen 20 shown in FIG. 2 displays a main menu 21, a status icon 22, a main area 23, and a page display 24. The main menu 21 is configured to include a plurality of icons. These icons are used to switch the content displayed in the main area 23. The status icon 22 displays an icon corresponding to the status of each device.

In the example illustrated in FIG. 2, widgets corresponding to pieces of content are arranged in the main area 23. The widgets are each a shortcut function that aggregates specific functions to make them easier for the user to access. In the example illustrated in FIG. 2, a map widget 231 and a music widget 232 are displayed as the widgets. In the case where a content widget is displayed in the main area 23, when the user taps on the widget, the content corresponding to the tapped widget is displayed in the main area 23. The size of an area (hereinafter, also referred to as a display area) in which the widget is displayed varies depending on the content.

In the map widget 231, an own vehicle position 231B is displayed on a map 231A. The own vehicle position 231B indicates the current location detected by the position information sensor 17. The own vehicle position 231B moves on the map 231A in real time with the movement of the vehicle 1. Also, the map 231A displayed in the map widget 231 is moved in real time so that the own vehicle position 231B is positioned in the display range of the map widget 231. The map widget 231 may further display a searched route.

The music widget 232 displays an image 232A corresponding to a song being played, a time bar 232B indicating the playback position of the currently playing song, icons 232C for selecting playback or stop of the song, playback of the previous song, playback of the next song, etc., icons 232D for operating the connection with a user's terminal, and so on. The display area of the music widget 232 is shorter in the lateral or horizontal direction than the display area of the map widget 231.

At the lower portion of the home screen 20, the page display 24 is arranged that indicates a currently displayed page. The page display 24 indicates the total number of pages and the current page. The page currently displayed on the screen is shown as an oval, and the remaining pages are shown as circles. In the example illustrated in FIG. 2, the total number of pages is three, and the first page at the left end is currently displayed. The two pages not displayed on the home screen 20 are also allocated display areas for other widgets. The size of the display area may be set in advance for each widget. The widgets to be displayed on the home screen 20 can be selected by the user from options provided to the user. Also, the order of the widgets can be specified by the user.

The home screen 20 is configured such that page scrolling can be performed by, for example, a swipe operation of the user. By page scrolling, it is possible to display the widgets that have not been displayed on the home screen 20. The widgets include, for example, a video widget, a weather forecast widget, a telephone widget, a vehicle information widget, a clock widget, etc., in addition to the map widget 231 and music widget 232. The video widget is a widget for displaying a television video or a moving image. The television video may be obtained via a television antenna provided in the vehicle 1. The moving image may be obtained via the communication unit 16 from, for example, a website that distributes moving images. The weather forecast widget is a widget that displays the weather forecast, current weather, current temperature, etc. The information about the weather forecast may be obtained from, for example, a website that distributes the weather forecast, via the communication unit 16. The telephone widget is a widget that displays an answer to a telephone call and information of a call destination. The vehicle information widget is a widget that displays the state of the vehicle detected by a sensor of the vehicle. The clock widget is a widget that displays the current time and date. The current time and date may be obtained via the communication unit 16 or via the position information sensor 17.

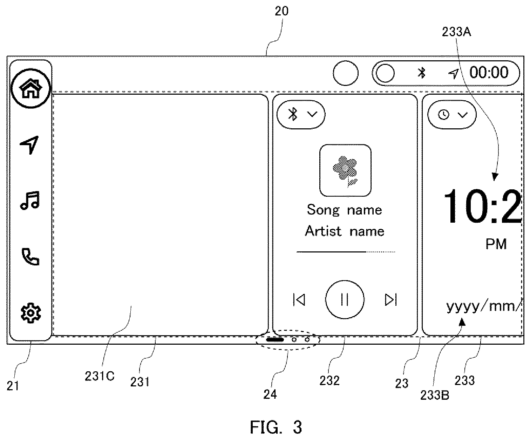

FIG. 3 is a diagram illustrating an example of the home screen 20 displayed on the display 15 while page scrolling the home screen illustrated in FIG. 2 in the left direction. When the home screen 20 illustrated in FIG. 2 is page scrolled in the left direction, the clock widget 233 arranged on the left edge of the next page appears from the right edge of the home screen 20. The clock widget 233 displays the current time 233A and date 233B. Here, in the in-vehicle device 10 according to the present embodiment, when the home screen 20 being scrolled includes the map widget 231, images of a single color (e.g., black or white) are displayed, instead of the map 231A and the own vehicle position 231B being displayed in real time in the display area of the map widget 231. That is, the in-vehicle device 10 displays fixed images by replacing images that changes in real time with the fixed images. In addition to the map widget 231, widgets (e.g., video widgets) that may cause malfunctions with animation display due to the high processing load on the processor 11 when displayed in real time during page scrolling are replaced with fixed images during page scrolling.

Here, if the map widget 231 performs animation display during scrolling while displaying the map 231A and the own vehicle position 231B in real time, the processing load on the processor 11 will become high. That is, since the map 231A and the own vehicle position 231B can change over time, it is considered that the images will be different for each frame when the animation display is performed. The processor 11 generates such images for each frame, so that the processing load on the processor 11 may become high. In this case, there is a risk that a malfunction may occur in the animation display or a hindrance may occur when the processor 11 performs other processing. During such scrolling of widgets that impose a high processing load on the processor 11, the processing load on the processor 11 can be reduced by not displaying real-time images.

On the other hand, the music widget 232, the clock widget 233, and the like have limited areas that change over time. For example, in the music widget 232, the time bar 232B may change, but the processing load on the processor 11 corresponding to this change is relatively low. Even if such a widget is displayed in real time during scrolling, the processing load on the processor 11 is relatively low. Such a widget with a relatively low processing load is displayed in real time even during scrolling.

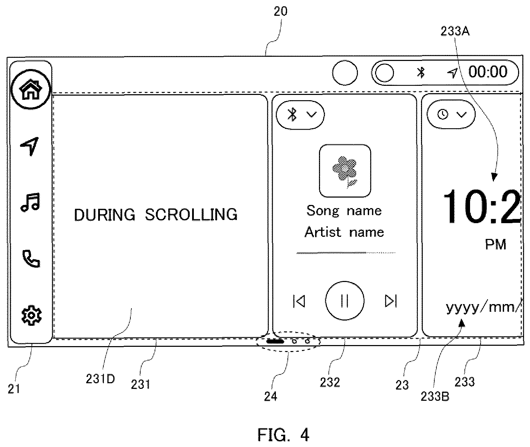

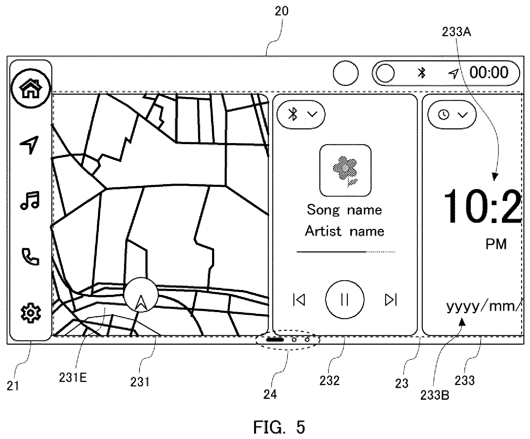

Here, note that in the example illustrated in FIG. 3, the fixed image 231C of a single color is displayed, but images to be replaced are not limited thereto. FIG. 4 is a diagram illustrating the home screen 20 on which an image including the text "SCROLLING" is displayed in the display area of the map widget 231 being scrolled. In this way, by replacing a scrolling image with one including a text, it is possible to notify the user that a malfunction has not occurred. Also, FIG. 5 is a diagram illustrating the home screen 20 on which an image 231E displayed in the map widget 231 at the start of scrolling is displayed in the display area of the map widget 231 during the scroll. That is, the captured image at the start of scrolling is used as the fixed image. Thus, the processing load on the processor 11 can be reduced by displaying an image that does not change in real time as an animation during the scroll. Note that instead of the image 231E that was displayed in the map widget 231 at the start of scrolling, a still image of a map unrelated to the own vehicle position may be displayed.

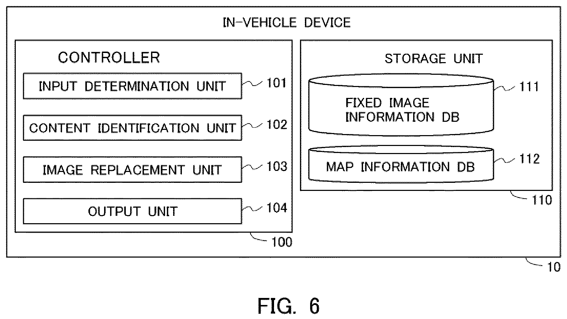

FIG. 6 is a diagram illustrating by way of example a functional configuration of the in-vehicle device 10. The in-vehicle device 10 includes a controller 100 and a storage unit 110 as functional components. The controller 100 is a functional component that is provided by, for example, the processor 11 executing various programs stored in the auxiliary storage unit 13. The controller 100 includes an input determination unit 101, a content identification unit 102, an image replacement unit 103, and an output unit 104. The processor 11 of the in-vehicle device 10 executes the processing of the input determination unit 101, the content identification unit 102, the image replacement unit 103, and the output unit 104 by a computer program on the main storage unit 12. However, all or a part of the processing may be executed by a hardware circuit.

The storage unit 110 is a means or unit that stores information, and includes the main storage unit 12 and the auxiliary storage unit 13. The storage unit 110 includes a fixed image information DB 111 and a map information DB 112. The fixed image information DB 111 and the map information DB 112 are built by a program of a database management system (DBMS) that is executed by the processor 11 to manage data stored in the auxiliary storage unit 13. The fixed image information DB 111 and the map information DB 112 are, for example, relational databases.

Here, note that any of the individual functional components of the in-vehicle device 10 or a part of the processing thereof may be executed by another or other computers connected to the network.

The input determination unit 101 receives a signal from the input unit 14, and determines a user's input operation via the input unit 14. When the user touches the touch panel, which is the input section 14, and makes a finger movement associated with a tap, flick, swipe, or pinch, the input determination unit 101 determines that a tap, flick, swipe, or pinch operation has been performed. Also, the input determination unit 101 may be capable of determining an input operation such as a double tap, a long tap, and a multi-tap in addition to a tap, a flick, a swipe, or a pinch. The relationship between the user's finger movements and the user's input operations is stored in the storage unit 110. Also, the input determination unit 101 may calculate the number of pages to be scrolled according to, for example, the direction and speed of the swipe operation. This calculation formula may be stored in the storage unit 110.

The content identification unit 102 identifies the content displayed on the home screen 20. In the case where a widget is placed on the home screen 20, the content corresponding to that widget may be identified. In the following, identifying a widget includes identifying a corresponding content, and identifying content includes identifying a corresponding widget. The "content displayed on the home screen 20" identified by the content identification unit 102 is content (widget) for which at least a portion of the display area is displayed on the home screen 20 between the time point when the content starts to move due to a user's operation and the time point when the movement is completed. That is, any content that appears on the home screen 20 due to scrolling may be identified by the content identification unit 102, even if it was not displayed on the home screen 20 when the scrolling of the home screen 20 started. The content identification unit 102 calculates the page at which the scroll starts and the page at which the scroll ends in response to a user's input operation (e.g., the position of a finger touching the home screen 20 and the change in that position over time), and identifies the pieces of content contained in all pages from the page at which the scroll starts to the page at which the scroll ends.

When any content displayed on the home screen 20 is predetermined content during scrolling, the image replacement unit 103 obtains a fixed image to be displayed in the display area of the predetermined content. The predetermined content is set in advance according to the processing capacity of the processor 11 and the storage capacity of the main storage unit 12 or the auxiliary storage unit 13. The fixed image may be a single color image as shown in FIG. 3, an image including a text such as "scrolling" as shown in FIG. 4, or a captured image at the start of scrolling as shown in FIG. 5. Note that in the case where the predetermined content is not displayed on the home screen 20 at the start of scrolling and is displayed on the home screen 20 during scrolling, an image that is assumed to have been displayed on the home screen 20 at the start of scrolling may be generated as the fixed image.

The output unit 104 displays an image corresponding to each content on the home screen 20 in a display area corresponding to each content. The output unit 104 generates an image corresponding to each content for each frame, generates a signal for displaying the home screen 20 for each frame, and transmits the signal to the display 15. In addition, when the input determination unit 101 determines that the user has, for example, tapped the display area of content, the output unit 104 may output an operation screen corresponding to that content. The operation screen corresponding to the content is stored in the storage unit 110. When no screen operation is performed by the user, the output unit 104 generates a real-time image corresponding to the content and displays it on the display 15. For example, in the case of the map widget 231, the output unit 104 obtains the current location obtained by the position information sensor 17, and displays the own vehicle position 231B on the map 231A obtained from the map information DB 112.

In addition, the output unit 104 performs animation display so that the display area of each content moves in the direction of scrolling during page scrolling. The output unit 104 generates and outputs an image of each frame. The animation display in the present embodiment is performed by continuously switching the frames (i.e., still images) to be displayed on the display 15 at each predetermined display switching timing. First, the output unit 104 generates, by calculation, information about the next frame (hereinafter, also referred to as next frame information) which is the frame to be displayed next to the currently displayed frame for each display timing. The animation to be displayed by a swipe operation differs depending on the display content at the time of the swipe operation and the speed or the speed of a finger at the time of the swipe operation. Therefore, at each display switching timing, the output unit 104 generates various kinds of information about the next frame, such as which display area is to be displayed at which position. The information about the next frame includes information about the position (which may be coordinates) of each display area. The output unit 104 performs animation display by switching to the next frame at each display switching timing. At this time, the output unit 104 displays a fixed image obtained in advance in the display area corresponding to the predetermined content, and displays a real-time image in the display area corresponding to content other than the predetermined content.

The fixed image information DB 111 stores information about fixed images corresponding to pieces of predetermined content. The fixed images are each a still image such as an image of a single color, an image including a text indicating that scrolling is being performed, or a captured image of the widget at the start of scrolling. These fixed images may be stored in the fixed image information DB 111 by the image replacement unit 103.

Moreover, the map information DB 112 stores map information including map data and POIs (Points of Interest) such as texts and/or photographs indicating the characteristics of each point on the map data. Note that the map information DB 112 may be provided from other systems connected to the network such as, for example, a GIS (Geographic Information System). The map data includes, for example, link data related to roads (links), node data related to node points, intersection data related to each intersection, search data for searching routes, facility data related to facilities, search data for searching points or locations, etc.

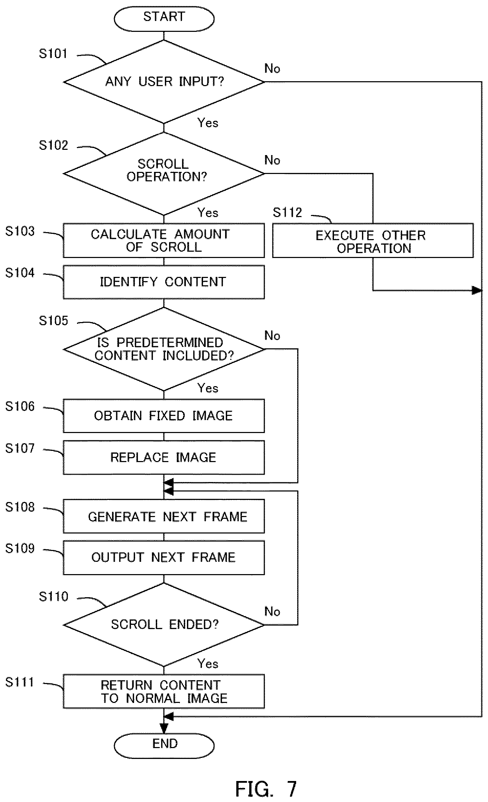

Next, a description will be made of the processing in the in-vehicle device 10 when page scrolling is performed on the home screen 20. FIG. 7 is a flowchart of the processing in the in-vehicle device 10 when page scrolling is performed on the home screen 20 according to the present embodiment. The processing illustrated in FIG. 7 is repeatedly executed in the in-vehicle device 10 at predetermined time intervals.

In step S101, the input determination unit 101 determines whether or not there has been an input from the user to the input unit 14. For example, when the input determination unit 101 detects, based on a signal from the input unit 14, that the user has touched the screen, it determines that an input has been made by the user. In the present embodiment, a touch panel is given as an example of the input unit 14, but the input unit 14 is not limited thereto, and for example, buttons arranged on a steering wheel may be the input unit 14. For example, when the user presses a button arranged on the steering wheel, it may be determined that an input has been made by the user. If the input determination unit 101 makes an affirmative determination in step S101, the process proceeds to step S102, but if the input determination unit 101 makes a negative determination, this routine ends.

In step S102, the input determination unit 101 determines whether or not the input from the user is a scroll operation (which may be a swipe operation). The input determination unit 101 determines whether or not the movement of the user's finger while the user is touching the screen corresponds to the scroll operation, for example. The storage unit 110 stores information related to the scroll operation, such as the position on the screen where the user is touching, the direction in which the finger moves on the screen, the speed or acceleration at which the finger moves on the screen, and so on. The input determination unit 101 determines, based on the input from the user to the input unit 14 and the information stored in the storage unit 110, whether or not the input from the user corresponds to the scroll operation. Note that, as another example, the input determination unit 101 may determine that the input from the user corresponds to scrolling when the user presses a button corresponding to scrolling that is arranged on the steering wheel. If the input determination unit 101 makes an affirmative determination in step S102, the process proceeds to step S103, but if the input determination unit 101 makes a negative determination in step S102, the process proceeds to step S112. In step S112, the controller 100 executes processing corresponding to an operation other than the scroll operation.

In step S103, the input determination unit 101 calculates an amount of scroll corresponding to a screen operation of the user. The amount of scroll is the number of pages moved by the scroll operation. For example, the amount of scroll increases according to the speed or acceleration of the finger when the user performs the scroll operation. The input determination unit 101 calculates the speed or acceleration at which the finger of the user moves on the touch panel. The relationship between the speed or acceleration of the finger and the amount of scroll may be stored in the storage unit 110. Note that, as another example, the input determination unit 101 may calculate the amount of scroll in such a manner that the amount of scroll in the case where the user presses the button corresponding to scrolling arranged on the steering wheel once is one page.

In step S104, the content identification unit 102 identifies content displayed on the display 15. For example, the output unit 104 stores in the storage unit 110 which content is displayed on which page. This relationship may be stored in the storage unit 110 as the order in which pieces of content are to be displayed. The content identification unit 102 may identify the content displayed on the display 15 based on the page displayed on the display 15. For example, the content identification unit 102 reads the page currently displayed on the display 15 from the storage unit 110, and identifies the content displayed on the page based on the display order of pieces of content stored in the storage unit 110. Note that this is not the only way to identify the content displayed on the display 15.

In addition, the content identification unit 102 also identifies content that is to be newly displayed on the display 15 as a result of scrolling. Based on the relationship between the amount of scroll determined by the input determination unit 101 in step S103 and the display order of widgets stored in the storage unit 110, the content identification unit 102 identifies all the pieces of content to be newly displayed on the display 15 during scrolling. In the case where a plurality of pieces of content are already displayed on the display 15 and where a plurality of pieces of content are newly displayed on the display 15, the content identification unit 102 identifies all the pieces of content displayed on the display 15 and all the pieces of content to be newly displayed on the display 15.

In step S105, the image replacement unit 103 determines whether or not predetermined content is included in the content identified by the content identification unit 102 in step S104. The predetermined content is content registered in the fixed image information DB 111. The image replacement unit 103 compares the content identified by the content identification unit 102 with the content registered in the fixed image information DB 111 to determine whether the content identified by the content identification unit 102 in step S104 is the predetermined content. If the image replacement unit 103 makes an affirmative determination in step S105, the process proceeds to step S106, but if the image replacement unit 103 makes a negative determination in step S105, the process proceeds to step S108.

In step S106, the image replacement unit 103 obtains, from the fixed image information DB 111, a fixed image corresponding to the predetermined content determined in step S105. In the case where there are a plurality of pieces of predetermined content, the image replacement unit 103 obtains a fixed image for each predetermined content. The image replacement unit 103 identifies a record corresponding to the predetermined content from the fixed image information DB 111, and reads information about the fixed image of the record. In the case where there are a plurality of pieces of predetermined content, the image replacement unit 103 reads information about a fixed image corresponding to each predetermined content from the fixed image information DB 111. In this case, the fixed image information DB 111 may store, for example, still images of a single color or still images including a text indicating that scrolling is being performed.

Here, note that, as a further example, the image replacement unit 103 may generate and store the fixed image in the fixed image information DB 111 before reading the fixed image from the fixed image information DB 111. The fixed image generated at this time may be a captured image of the predetermined content displayed on the display 15 at the start of scrolling. In addition, a fixed image corresponding to content that has not been displayed on the display 15 at the start of scrolling may be a captured image of predetermined content that is assumed to have been displayed on the display 15 at the start of scrolling. In this case, the image replacement unit 103 generates the image that is assumed to have been displayed on the display 15 at the start of scrolling, and stores the image thus generated in the fixed image information DB 111.

Also, note that, as a yet further example, the image replacement unit 103 may obtain, as the fixed image of the predetermined content displayed on the display 15 at the start of scrolling, a captured image of the predetermined content displayed on the display 15 at the start of scrolling, and may obtain, as the fixed image of predetermined content not displayed on the display 15 at the start of scrolling, a still image of a single color or a still image including a text indicating that scrolling is being performed. Further, as a still further example, the image replacement unit 103 may obtain, as the fixed image of the predetermined content to be displayed on the display 15 at the end of scrolling, a captured image of the predetermined content displayed on the display 15 at the start of scrolling, and may obtain, as the fixed image of predetermined content not to be displayed on the display 15 at the end of scrolling, a still image of a single color or a still image including a text indicating that scrolling is being performed.

Then, in step S107, the image replacement unit 103 replaces the fixed image corresponding to the predetermined content determined in step S105 as the image to be displayed on the display 15 during scrolling. The image replacement unit 103 passes the image thus replaced to the output unit 104.

In step S108, the output unit 104 generates the next frame that is a frame to be displayed next. The output unit 104 calculates the content to be displayed in the main area 23 and the display position of the content at the display timing of the next frame, based on the display order of pieces of content, the scroll speed or acceleration, and the time period from the current time point to the time point at which the next frame is displayed. That is, the output unit 104 calculates which content is to be displayed at which position in the main area 23. Then, in the case where the predetermined content is included in the content to be displayed in the main area 23, the next frame is generated in such a manner that the fixed image replaced in step S107 is displayed in the display area corresponding to the predetermined content. Also, for pieces of content other than the predetermined content, the output unit 104 generates an image (real-time image) corresponding to the time point at which the next frame is displayed, and generates the next frame so as to display the image in the corresponding display area. In addition, the output unit 104 generates an image corresponding to an area other than the main area 23, thereby generating the next frame. The image of the next frame corresponding to the area other than the main area 23 is a real-time image.

After generating the next frame in step S108, the output unit 104 outputs the next frame to the display 15 in step S109. As a result, the next frame is displayed on the display 15. That is, the output unit 104 outputs, for each frame, a signal for displaying a predetermined fixed image in the display area corresponding to the predetermined content automatically in real time. In this way, the output unit 104 displays the fixed image on the display 15 in such a manner that the fixed image moves in accordance with the movement of the display area of the predetermined content due to scrolling. In addition, for pieces of content other than the predetermined content, the output unit 104 displays a real-time image on the display 15 in such a manner that the real-time image moves in accordance with the scrolling. The output unit 104 moves the display area corresponding to each content little by little in the scroll direction for each frame, thereby enabling continuous animation display.

In step S110, the output unit 104 determines whether or not the scrolling has ended. The output unit 104 may determine whether or not the scrolling has ended, by determining whether or not the amount of scroll from the scroll start time point to the current time point has reached the amount of scroll determined by the input determination unit 101 in step S102. Note that the output unit 104 may determine whether or not the scrolling has ended, by means of other known methods. If the output unit 104 makes an affirmative determination in step S110, the process proceeds to step S111 , but if the output unit 104 makes a negative determination in step S110, the process returns to step S108. As a result, the fixed image is displayed in the display area corresponding to the predetermined content in the display 15 until the scrolling ends.

In step S111, the output unit 104 returns the image corresponding to the predetermined content determined in step S105 to a normal image. That is, the output unit 104 switches the image corresponding to the predetermined content from the fixed image to the real-time image, thereby to display it on the display 15. Thereafter, the output unit 104 ends this routine.

As described above, according to the present embodiment, for content that may cause a malfunction if animation display is performed during scrolling, the malfunction can be suppressed by replacing the content with a fixed image during scrolling. This prevents the image displayed on the screen from failing to follow the operation of the user.

### <Second Embodiment>

In the first embodiment, in the case where the display area of the predetermined content exists in the home screen 20 and where a scroll operation is performed, an image displayed in the display area is replaced with a fixed image. However, depending on the processing power of the processor 11, it may be possible to scroll only one predetermined content. Further, it may be difficult to scroll two pieces of predetermined content while displaying them in real time. For example, in the case where a wide area map and an enlarged map are displayed side by side, the processing power of the processor 11 may not be sufficient to scroll both maps while displaying them in real time.

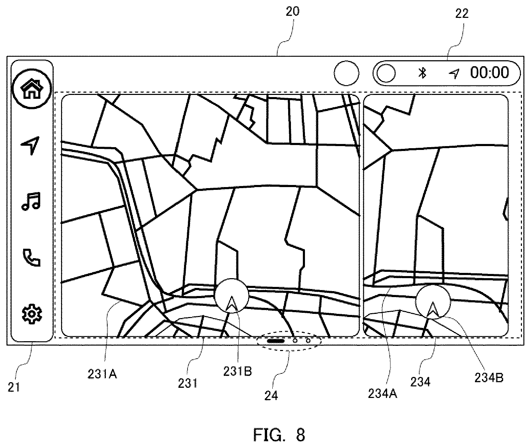

Therefore, in a second embodiment, when the user performs a scroll operation while two or more pieces of predetermined content are displayed on the display 15, a fixed image is displayed in the display areas of the pieces of predetermined content. FIG. 8 is a view illustrating an example of the home screen 20 on which a second map widget 234 is displayed on the display 15 in addition to the map widget 231. The map widget 231 is the same as that in the first embodiment. The second map widget 234 is a widget having a half width in the lateral direction with respect to the map widget 231, and displays an own vehicle position 234B on the map 234A. The map widget 231 and the second map widget 234 can be independently changed in scale. The own vehicle position 234B displayed in the second map widget 234 indicates the current location detected by the position information sensor 17. The own vehicle position 234B moves on the map 234A in real time together with the movement of the vehicle 1. In addition, the map 234A displayed in the second map widget 234 is moved in real time in such a manner that the own vehicle position 234B is positioned in the display range of the second map widget 234. The route searched may be displayed in the second map widget 234.

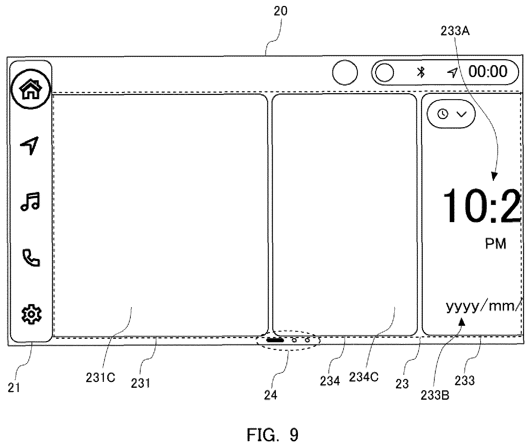

FIG. 9 is a diagram illustrating an example of the home screen 20 displayed on the display 15 while page scrolling the home screen illustrated in FIG. 8 in the left direction. When the home screen 20 illustrated in FIG. 8 is page scrolled in the left direction, the clock widget 233 arranged on the left edge of the next page appears from the right edge of the home screen 20. The clock widget 233 is the same as that in the first embodiment. Here, when the map widget 231 and the second map widget 234 are included in the home screen 20 during scrolling, the in-vehicle device 10 according to the present embodiment displays images of a single color (for example, black or white) in the display areas of the map widget 231 and the second map widget 234. That is, the in-vehicle device 10 displays fixed images by replacing images that changes in real time with the fixed images.

Here, note that, in the example illustrated in FIG. 9, a fixed image 231C of a single color is displayed corresponding to the map widget 231, and a fixed image 234C is displayed corresponding to the second map widget 234, but the fixed images are not limited to these. Similar to the map widget 231 illustrated in FIG. 4, an image including the text "SCROLLING" may be displayed in the display area of each of the map widget 231 and the second map widget 234 during scrolling. In addition, similar to the map widget 231 illustrated in FIG. 5, images that were obtained by capturing the images displayed in the map widget 231 and the second map widget 234, respectively, at the start of scrolling may be displayed in the respective display areas of the map widget 231 and the second map widget 234 during scrolling. Further, instead of the images displayed in the map widget 231 and the second map widget 234 at the start of scrolling, a still image of a map unrelated to the own vehicle position may be displayed for each of the widgets.

Here, note that, as another example, a fixed image may be displayed only in the display area corresponding to any one of the two pieces of predetermined content that are scrolling. That is, a real-time image may be displayed in the display area corresponding to the other predetermined content. In addition, when one predetermined content moves out of the main area 23 and becomes invisible during scrolling, a real-time image may be displayed in the display area of the other predetermined content displayed in the main area 23. Also, as a further example, the fixed image may be continuously displayed in the display area of the other predetermined content until scrolling is completed.

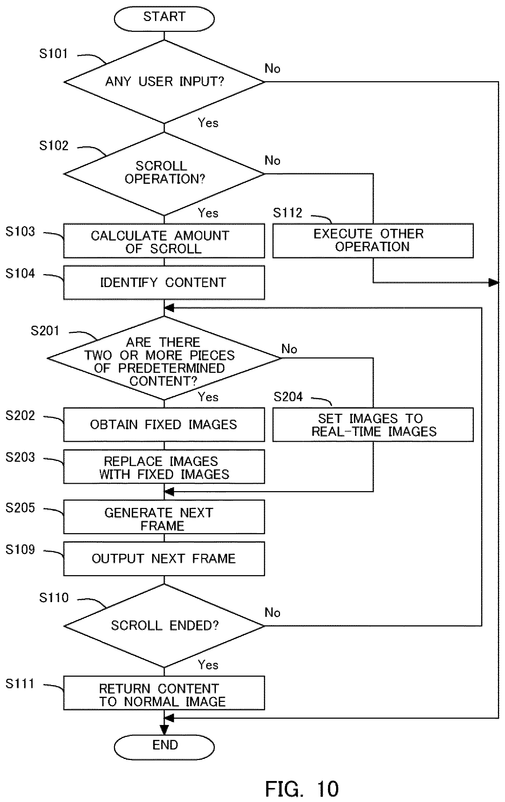

FIG. 10 is a flowchart of the processing in the in-vehicle device 10 when page scrolling is performed on the home screen 20 according to the present embodiment. The processing illustrated in FIG. 10 is repeatedly executed in the in-vehicle device 10 at predetermined time intervals. In the processing of the flowchart illustrated in FIG. 10, steps in which the same processing as that of the flowchart illustrated in FIG. 7 is executed is denoted by the same reference signs, and the description thereof will be omitted.

In the flowchart illustrated in FIG. 10, when the processing of step S104 ends, the process proceeds to step S201. In step S201, the image replacement unit 103 determines whether or not there are two or more display areas for predetermined content in the main area 23. In this case, it is sufficient that at least part of the display areas for the predetermined content is located in the main area 23. The image replacement unit 103 calculates the content to be displayed in the main area 23 and the position at which the content is displayed at the display timing of the next frame, based on the display order of the content, the scroll speed or acceleration, and the time period from the current time point to the time point at which the next frame is displayed. That is, the image replacement unit 103 calculates which content is to be displayed at which position in the main area 23. Further, the image replacement unit 103 determines whether or not there are two or more display areas for predetermined content in the main area 23. If the image replacement unit 103 makes an affirmative determination in step S201, the process proceeds to step S202, but if the image replacement unit 103 makes a negative determination in step S201, the process proceeds to step S204.

In step S202, the image replacement unit 103 obtains, from the fixed image information DB 111, fixed images corresponding to the predetermined content determined in step S201. At this time, the image replacement unit 103 reads information about the fixed images corresponding to two or more pieces of predetermined content, respectively. In this case, the fixed image information DB 111 stores, for example, still images of a single color or still images including a text indicating that scrolling is being performed.

Here, note that, as a further example, the image replacement unit 103 may generate and store the fixed images in the fixed image information DB 111 before reading the fixed images from the fixed image information DB 111. The fixed images generated at this time may be captured images of the images displayed on the display 15 at the start of scrolling. In addition, fixed images corresponding to content that has not been displayed on the display 15 at the start of scrolling may be captured images for the predetermined content that is assumed to have been displayed on the display 15 at the start of scrolling. In this case, the image replacement unit 103 generates the images that are assumed to have been displayed on the display 15 at the start of scrolling, and stores the images thus generated in the fixed image information DB 111.

Then, in step S203, the image replacement unit 103 replaces the fixed images corresponding to the respective pieces of predetermined content determined in step S201 as the images to be displayed on the display 15 during scrolling. The image replacement unit 103 passes the images thus replaced to the output unit 104.

On the other hand, in step S204, the image replacement unit 103 sets the images to be displayed on the display 15 during scrolling to real-time images. That is, if there is one or less predetermined content displayed in the main area 23, the image replacement unit 103 sets so that all pieces of content are displayed in real-time images even while scrolling.

In step S205, the output unit 104 generates the next frame. The output unit 104 calculates the content to be displayed in the main area 23 and the display position of the content at the display timing of the next frame, based on the display order of content, the scroll speed or acceleration, and the time period from the current time point to the time point at which the next frame is displayed. Then, in the case where two or more pieces of predetermined content are included in the content to be displayed in the main area 23, the next frame is generated in such a manner that the fixed images replaced in step S203 are displayed in the display areas corresponding to the pieces of predetermined content. In addition, if there is one or less predetermined content to be displayed in the main area 23, the output unit 104 generates real-time images corresponding to the time point at which the next frame is displayed, and generates the next frame so as to display those images in the corresponding display areas. In addition, the output unit 104 generates images corresponding to areas other than the main area 23, thereby generating the next frame.

After generating the next frame in step S205, the output unit 104 outputs the next frame to the display 15 in step S109. As a result, the next frame is displayed on the display 15. In this way, in the case where two or more pieces of predetermined content are displayed in the main area 23 during scrolling, the output unit 104 displays fixed images on the display 15 in such a manner that the fixed images move in accordance with the movement of the display areas of the pieces of predetermined content due to scrolling. In addition, in the case where there is less than one predetermined content displayed in the main area 23, the output unit 104 displays the real-time images on the display 15 in such a manner that the real-time images move in accordance with the scrolling.

In step S110, the output unit 104 determines whether or not the scrolling has ended. If the output unit 104 makes an affirmative determination in step S110, the process proceeds to step S111, but if the output unit 104 makes a negative determination in step S110, the process returns to step S201.

As described above, according to the present embodiment, for pieces of content that may cause malfunctions if animation display is performed during scrolling, the malfunctions can be suppressed by replacing the pieces of content with fixed images during scrolling. This prevents the images displayed on the screen from failing to follow the operation of the user.

### <Other Embodiments>

The above-described embodiments are merely examples, but the present disclosure can be implemented with appropriate modifications without departing from the spirit thereof. The processing and/or means (devices, units, etc.) described in the present disclosure can be freely combined and implemented as long as no technical contradiction occurs.

In addition, the processing described as being performed by one device or unit may be shared and performed by a plurality of devices or units. Alternatively, the processing described as being performed by different devices or units may be performed by a single device or unit. In a computer system, it is possible to flexibly change what hardware configuration is used to realize each function.

In the above-mentioned embodiments, a case has been described in which the user performs scrolling by a swipe operation. However, the present invention is not limited to this, and for example, even when the user performs a pinch-in operation to reduce an image or a pinch-out operation to enlarge the image, if a display area corresponding to predetermined content is included, the controller 100 may replace the image with a fixed image thereby to reduce or enlarge the image. In this case, for content other than the predetermined content, the controller 100 may reduce or enlarge it while displaying a real-time image. In addition, for example, even in the case where the user changes the display order of the predetermined content or changes the position of the display area of the predetermined content by a drag operation, the controller 100 may change the display order or the position of the predetermined content by replacing the image with the fixed image. In this case, the controller 100 may change the display order or the position of content other than the predetermined content while displaying the real-time image.

In the above-mentioned embodiments, an example has been described in which the in-vehicle device 10 functions as an information processing apparatus, but the present invention is not limited to this, and for example, a user's mobile terminal may function as an information processing apparatus, or an external server may function as an information processing apparatus.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An information processing apparatus (10) comprising a controller configured to execute:
receiving a signal from a sensor (14) that detects when a user touches a screen (15);
determining, according to information stored in a storage (110), whether or not the signal from the sensor (14) is a signal for moving a display area (231, 232) within the screen (15), the display area (231, 232) being an area in which an image corresponding to content is displayed;
identifying, according to information stored in the storage (110), the content corresponding to the image displayed in the display area (231, 232) within the screen (15) in response to a determination that the signal is a signal for moving the display area (231, 232) within the screen (15);
determining, according to information stored in the storage (110), whether the content thus identified is predetermined content (231);
replacing, in response to a determination that the content is the predetermined content (231), the image corresponding to the predetermined content (231), which is to be displayed in the display area (231, 232) corresponding to each of frames while moving the display area (231, 232) within the screen (15), with a predetermined fixed image (231C, 231D, 231E) that is the same predetermined fixed image (231C, 231D, 231E) in each of the frames and is stored in the storage (110); and
outputting, for each of the frames, a signal for displaying the predetermined fixed image (231C, 231D, 231E) in the display area (231, 232) corresponding to the predetermined content (231) automatically in real time when the display area (231, 232) is moved within the screen (15) in response to the signal detected from the sensor (14).

2. An information processing apparatus (10) comprising a controller configured to execute:
detecting an input for moving a display area (231, 232) within a screen (15), the display area (231, 232) being an area in which an image corresponding to content is displayed;
identifying, in response to detection of the input, the content corresponding to the image displayed in the display area (231, 232) within the screen (15); and
replacing, in response to the content thus identified being predetermined content (231), the image corresponding to the predetermined content (231) while moving the display area (231, 232) within the screen (15), with a predetermined fixed image (231C, 231D, 231E).

3. The information processing apparatus (10) according to claim 2, wherein the controller obtains, as the predetermined fixed image (231C, 231D, 231E), an image (231E) corresponding to the predetermined content (231) at the time point at which the display area (231, 232) starts to move.

4. The information processing apparatus (10) according to claim 2, wherein the controller obtains, as the predetermined fixed image (231C, 231D, 231E), an image (231D) including a text indicating that the display area (231, 232) is moving.

5. The information processing apparatus (10) according to claim 2, wherein the controller obtains an image (231C) of a single color as the predetermined fixed image (231C, 231D, 231E).

6. The information processing apparatus (10) according to claim 2, wherein the image corresponding to the predetermined content (231) includes an image that changes over time.

7. The information processing apparatus (10) according to claim 2, wherein the predetermined content (231) includes content that provides at least one of a map including a current location, and playback of a video.

8. The information processing apparatus (10) according to claim 2, further comprising a storage (110) configured to store the predetermined fixed image (231C, 231D, 231E) corresponding to the predetermined content (231).

9. The information processing apparatus (10) according to claim 2, wherein the controller displays, in response to the identified content being content other than the predetermined content (231), the image corresponding to the content while moving the display area (231, 232) within the screen (15).

10. An information processing method for causing a computer (10) to execute:
detecting an input for moving a display area (231, 232) within a screen (15), the display area (231, 232) being an area in which an image corresponding to content is displayed;
identifying, in response to detection of the input, the content corresponding to the image displayed in the display area (231, 232) within the screen (15); and
replacing, in response to the content thus identified being predetermined content (231), the image corresponding to the predetermined content (231) while moving the display area (231, 232) within the screen (15), with a predetermined fixed image (231C, 231D, 231E).

11. The information processing method according to claim 10, wherein the computer (10) obtains, as the predetermined fixed image (231C, 231D, 231E), an image (231E) corresponding to the predetermined content (231) at the time point at which the display area (231, 232) starts to move.

12. The information processing method according to claim 10, wherein the computer (10) obtains, as the predetermined fixed image (231C, 231D, 231E), an image (231D) including a text indicating that the display area (231, 232) is moving.

13. The information processing method according to claim 10, wherein the computer (10) obtains an image (231C) of a single color as the predetermined fixed image (231C, 231D, 231E).

14. The information processing method according to claim 10, wherein the image corresponding to the predetermined content (231) includes an image that changes over time.

15. The information processing method according to claim 10, wherein the predetermined content (231) includes content that provides at least one of a map including a current location, and playback of a video.
